# EUROPÄISCHE PATENTANMELDUNG

(11) **EP 2 793 180 A1**
(43) Veröffentlichungstag der Anmeldung: **22.10.2014**
(21) Anmeldenummer: 13164513.7
(22) Anmeldetag: 19.04.2013
(51) Int. Cl.: G06Q 30/06, G06Q 20/32

(54) **Verfahren zur Abwicklung von Bereitstellungsvorgängen**

(71) Anmelder: Scheidt & Bachmann GmbH, 41238 Mönchengladbach (DE)
(72) Erfinder: Miller, Norbert, 41063 Mönchengladbach (DE)
(74) Vertreter: Stenger, Watzke & Ring

(57) **Zusammenfassung**

Die Erfindung betrifft eine Lösung zur Verbesserung der Automatisierung des Vertriebsvorganges bei Verfahren zur Abwicklung von Bereitstellungsvorgängen im Zusammenhang mit dem Vertrieb von Produkten und Dienstleistungen, wobei in einem rechnerbasierten Zentralsystem Nutzer und Produkte und/oder Dienstleistungen anbietende Produktsysteme registriert sind, und wobei die Nutzer über Mobilfunkendgeräte verfügen.

## Beschreibung

Die vorliegende Erfindung betrifft ein Verfahren zur automatisierten Abwicklung von Bereitstellungsvorgängen im Zusammenhang mit dem Vertrieb von Produkten und Dienstleistungen.

Es sind eine Vielzahl von Vertriebsvorgängen in Bezug auf Produkte und Dienstleistungen bekannt, bei welchen insbesondere Bonitätsprüfungs- und Bezahlvorgänge umständlich organisiert sind. Damit werden sie zwar für eine große Nutzerzahl flexibel einsetzbar, verkomplizieren aber den Gesamtvorgang. Auf Seiten der Anbieter bleibt es in der Regel bei dem reinen Angebot von Produkten und Dienstleistungen. Dienstleistungen sind beispielsweise das Anbieten von Parkraum, die Abwicklung logistischer Vorgänge und dergleichen. Die Nutzer müssen in der Regel die Zahlungsmittel mit sich führen, also Bargeld, Bank- oder Kreditkarten. Bei dem Bezug der Waren oder der Dienstleistung kommt es im Allgemeinen zu einem einfachen Tausch von Produkt gegen Bezahlung. In manchen Fällen, beispielsweise bei der Abwicklung von Parkvorgängen in Parkhäusern, kann zwar der Nutzer zunächst spontan den Parkraum nutzen, er kann den Bereich jedoch erst verlassen, wenn er einen Nachweis über die Bezahlung vorlegen kann beziehungsweise an der Ausfahrt eines Parkhauses präsentiert. Dies wird etwas genauer am Beispiel eines Parkhauses erläutert:
Der Begriff "Parkhaus" im Sinne der Erfindung meint eine Parkeinrichtungen für Straßenfahrzeuge, bei welcher Zufahrten und Ausfahrten im Normalfall gesperrt sind und von automatischen Parksystemen kontrolliert werden. Solche Parkeinrichtungen sind Parkhäuser, Parkplätze, Garagen, Tiefgaragen oder ähnliches. Ein Parkhaus hat wenigstens eine Zufahrt und wenigstens eine Ausfahrt.

Der Begriff "Einfahrt" im Sinne der Erfindung meint ein die Zufahrt zum Parkhaus versperrendes Sperrmittel, welches unter bestimmten Bedingungen die Zufahrt für den Durchlass eines Fahrzeugs freigibt, sowie Kontrollmechanismen, Sensoren und Aktoren zur Betätigung des Sperrmittels. Für ein typisches Parkhaus ist dies eine Schranke mitsamt Antrieb und dem zugehörigen Kontrollsystem mit Lese- und/oder Ausgabemöglichkeit für Parkmedien. Das verwendete Sperrmittel kann aber auch ein Rolltor, Schwenktor, Sektionaltor, versenkbarer Poller oder ähnliches sein.

Der Begriff "Ausfahrt" im Sinne der Erfindung meint ein die Ausfahrt aus dem Parkhaus versperrendes Sperrmittel, welches unter bestimmten Bedingungen die Ausfahrt für den Durchlass eines Fahrzeugs freigibt, sowie Kontrollmechanismen, Sensoren und Aktoren zur Betätigung des Sperrmittels. Für ein typisches Parkhaus ist dies eine Schranke mitsamt Antrieb und dem zugehörigen Kontrollsystem mit Lesemöglichkeit für Parkmedien. Das verwendete Sperrmittel kann aber auch ein Rolltor, Schwenktor, Sektionaltor, versenkbarer Poller oder ähnliches sein.

Heutige Parkhäuser gewähren die Berechtigung zur Zufahrt und anschließenden Ausfahrt über sehr verschiedenartige Medien. Hierzu gehören z.B. Parkausweise mit Magnetstreifen, Barcode, mit Transpondern mit Nahfeldeigenschaften oder auch mit UHF-Transpondern mit größeren Reichweiten.

Unterschieden werden dabei Nutzer, die kein eigenes Parkmedium mitbringen und ein solches an der Einfahrt auf Anforderung erhalten (z.B. sogenannte "Kurzparker"), von solchen, die mit dem Parkhaus in irgendeiner vertraglichen Beziehung stehen bzw. im Parkhaus bekannt sind und die ein Ausweismedium mitbringen (z.B. sogenannte "Dauerparker"). Ein solches Ausweismedium kann sich z.B. als Karte im Besitz des Fahrers befinden oder auch dem Fahrzeug zugeordnet sein.

In jedem Fall muss spätestens vor Verlassen des Parkhauses sichergestellt sein, dass die Parkleistung bezahlt wurde oder dass der Zahlbetrag im Nachgang sicher eingezogen werden kann.

Insbesondere die Kurzparker müssen im Regelfall vor Verlassen des Parkhauses an einem Kassenautomaten die Parkgebühr zahlen.

Die Verschiedenartigkeit der verwendeten Parkmedien macht es sehr schwierig, übergreifend über viele Parkhäuser, Parkhausbetreiber und Regionen einheitliche Zugangs- und Bezahlungsverfahren zu etablieren.

Auch bei vergleichbaren Vorgängen liegen die Probleme ähnlich. Dies gilt auch für den reinen Produktbezug. So ist es beispielsweise denkbar, Vertriebsvorgänge in Großmärkten anders zu organisieren, indem nämlich Nutzer durch Einlegen von Waren in den Korb ihre Erwerbsabsicht signalisieren. Dies entspricht beispielsweise dem Einfahren in ein Parkhaus, dem Eintreten in einen gesicherten Bereich, beispielsweise ein Kino. Auch hier scheitert eine weitergehende Automatisierung und insbesondere auch Vereinheitlichung von Produktsystemen an den großen Verschiedenartigkeiten einerseits und an dem Mangel eines überdeckenden Verfahrens.

Ausgehend vom beschriebenen Stand der Technik liegt der vorliegenden Erfindung die A U F G A B E zugrunde, ein Verfahren zur Abwicklung von Bereitstellungsvorgängen im Zusammenhang mit dem Vertrieb von Produkten und Dienstleistungen bereitzustellen, welches unterschiedlichste Produktsysteme umfassen und eine weitergehende Automatisierung des Vertriebsvorganges ermöglichen kann.

Zur technischen **LÖSUNG** dieser Aufgabe wird mit der Erfindung ein Verfahren mit den Merkmalen des Anspruches 1 vorgeschlagen. Weitere Vorteile und Merkmale ergeben sich aus den Unteransprüchen.

Erfindungsgemäß ist vorgesehen, dass sowohl die Nutzer als auch die unterschiedlichsten Produktsysteme in einem rechnerbasierten Zentralsystem registriert sind. Produktsystem ist im Rahmen der vorliegenden Beschreibung der Oberbegriff für alle Arten von Anbietern für Waren und/oder Dienstleistern, also Betreibern von Kinos, Parkhäusern, Tankstellen, Großmärkten oder sonstigen Vertriebsstätten. Weiterhin basiert das erfindungsgemäße Verfahren darauf, dass der Nutzer über ein Mobilfunkendgerät verfügt. Dieses ist im Rahmen der vorliegenden Beschreibung ein zeitgemäßes Smartphone, welches wenigstens über eine Kamera verfügt und zur Verarbeitung von Apps geeignet ist.

Das Verfahren sieht vor, dass der Nutzer zunächst seine Erwerbsabsicht signalisiert. Dies kann erfolgen durch das Einfahren in ein Parkhaus, das Betreten eines entsprechenden Zugangsbereiches eines Kinos oder Theaters, das Auswählen von Waren und dergleichen.

Das Produktsystem erzeugt daraufhin einen Erwerbsbeleg mit einem maschinenlesbaren Code. Dies kann beispielsweise an der Einfahrt eines Parkhauses oder im Eintrittsbereich eines Kinos erfolgen. Im Falle eines wie bereits beschriebenen Großmarktes kann es sich um eine Zentralstelle handeln, an welcher der Kunde die gewünschte Ware präsentiert und einen Erwerbsbeleg erhält. Der Erwerbsbeleg ist entweder ein standardisiertes Papier beziehungsweise eine Karte, die einfach ausgegeben wird, oder ein individuell gedrucktes Papier, beispielsweise mit einem Barcode in Form eines Strichcodes oder eines zweidimensionalen oder beispielsweise QR-Codes oder auch einfach ein alphanumerischer Code in Klarschrift.

Im nächsten Schritt erfasst der Nutzer den auf dem Erwerbsbeleg befindlichen Code und leitet den erfassten Code mittels seines Mobilfunkendgerätes an das Zentralsystem weiter. Dies kann unter Verwendung einer dafür vorgesehenen App automatisiert erfolgen.

Da der Code sowohl Produktsysteminformationen als auch Produktinformationen enthält und der Absender des Codes aus Sicht des Zentralsystems eindeutig ist, kennt das Zentralsystem somit bei Empfang des Codes sowohl das Produktsystem als auch den Nutzer sowie zumindest in Bezug auf die wesentlichen Aspekte das Produkt. Hier kann es sich um eine pauschalisierte Produktinformation handeln, also eine verallgemeinerte Parkkostenangabe oder auch um präzise Produktpreisinformationen. Aufgrund der erhaltenen Informationen überprüft das Zentralsystem nunmehr die Bonität des registrierten Nutzers und erzeugt eine Bonitätsbestätigung. Diese Bonitätsbestätigung in Form eines Datensatzes überträgt das Zentralsystem direkt an das Produktsystem. Auf diese Weise ist der Bezug des Produktes beziehungsweise der Dienstleistung auf Seiten des Produktsystems praktisch freigeschaltet und das Produktsystem gibt den Bezug gegenüber dem Nutzer frei. Dies äußert sich beispielsweise darin, dass ein Parkhausbenutzer das Parkhaus ungehindert verlassen kann, wenn er beispielsweise den Erwerbsbeleg an einer Schranke einlesen lässt, oder dass ein Nutzer ein Kino betreten kann oder beispielsweise unter Vorweisung seines Beleges, in der Regel des Erwerbsbeleges, den Marktbereich mit den Produkten verlassen kann.

Gemäß einem weiteren vorteilhaften Vorschlag der Erfindung weist der Erwerbsbeleg wenigstens ein weiteres maschinenlesbares Element auf. Hierbei kann es sich um einen herkömmlichen produktsysteminternen Code, einen Magnetstreifen, Strichcode, Transponder oder dergleichen, handeln, so dass einerseits ermöglich ist, dass auch nicht im System registrierte Nutzer das Produktsystem, beispielsweise das Parkhaus, in herkömmlicher Weise nutzen können, andererseits wird ermöglicht, dass in der Kommunikation zwischen Nutzer und Produktsystem, beispielsweise an einer Ausfahrt eines Parkhauses oder dergleichen, das Produktsystem die Bonitätsbestätigung eindeutig zuordnen kann. Da das Produktsystem den Erwerbsbeleg ausgegeben hat, kann über das weitere maschinenlesbare Element eine eindeutige Zuordnung erfolgen.

Gemäß einem weiteren vorteilhaften Vorschlag der Erfindung kann das Produktsystem an das Zentralsystem Detailinformationen nachliefern. Dies ist beispielsweise sinnvoll, wenn zum Zeitpunkt der Bonitätsbestätigung der genaue Endpreis des Produktes oder der Dienstleistung noch nicht bekannt ist. Dies kann beispielsweise der Fall sein, wenn der Preis abhängig ist von der Parkdauer. In diesem Fall kann das Zentralsystem die Bonität für eine Pauschale bestätigen, die in jedem Fall eine durchschnittliche Parkdauer abdecken wird. Nach Ausfahrt des Nutzers aus dem Parkhaus kann das Produktsystem dann dem Zentralsystem Detailinformationen über Parkdauer und Preis nachliefern.

In vorteilhafter Weise kann das Zentralsystem um ein Abrechnungssystem ergänzt werden, indem das Zentralsystem mit einem etablierten automatisierten Abrechnungssystem kommuniziert oder selbst ein solches realisiert hat. Das Abrechnungssystem kann dann die genauen Preise von dem ihm bekannten Nutzer einziehen und dem Produktsystem gutschreiben.

Wenigstens der Nutzer ist gemäß einem vorteilhaften Vorschlag der Erfindung durch eine systeminterne Teilnehmerkennung identifizierbar, so dass Dritte nicht beispielsweise über eine Mobilfunknummer oder dergleichen den Nutzer ausforschen oder das System manipulieren können. In vorteilhafter Weise ist auch das Produktsystem über eine Kennung im Zentralsystem identifizierbar.

Mit der Erfindung wird ein einfach realisierbares Verfahren bereitgestellt, welches eine weitgehende Automatisierung von Vertriebsvorgängen ermöglicht. Insbesondere stellt die Erfindung auch ein übergreifendes Bezugs-/Zahlungsverfahren beispielsweise für Parkhäuser unterschiedlicher Betreiber in unterschiedlichen Regionen bereit, welches trotz unterschiedlicher Parkmedien das einheitliche Nutzen und Bezahlen der Parkvorgänge für registrierte Nutzer über ein Hintergrundsystem ermöglicht. Dadurch ist der Nutzer nicht zur Zahlung der Parkgebühr auf einen Kassenautomaten angewiesen. Gleichwohl erlaubt das System die konventionelle Nutzung für nicht registrierte Nutzer, indem sie z.B. ihren Parkschein in gewohnter Weise an einem Parkautomaten bezahlen. Um das System bspw. in bestehenden Parkhäusern zu nutzen, braucht die vorhandene Parkhaus-Infrastruktur an den Ein- und Ausfahrten, welche wesentlich bestimmt ist durch die vorhandene Parkschein-Technologie, z.B. Magnetstreifen oder Strichcode, nicht nachgerüstet zu werden, solange sie in der Lage ist, den erfindungsgemäßen maschinenlesbaren Code auf den Parkschein zu drucken.

Weitere Vorteile und Merkmale der Erfindung ergeben sich aus der folgenden Beschreibung anhand der Figuren. Dabei zeigen:
- Fig. 1: eine schematische Darstellung der für das Verfahren einzusetzenden Infrastruktur und
- Fig. 2: eine schematische Darstellung zur Erläuterung des Ablaufes bei der Anwendung des Verfahrens in einem Parkhaus.

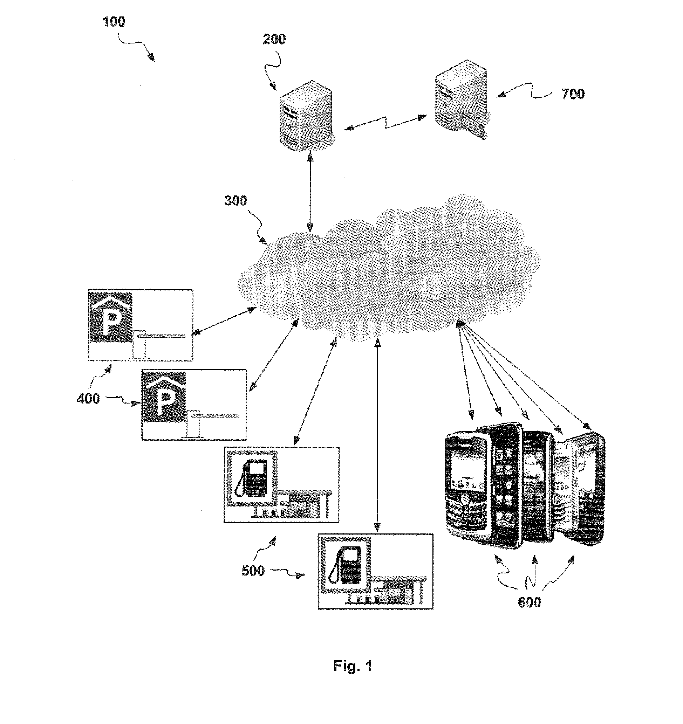

Figur 1 zeigt ein System 100 zur Nutzung von in einem Hintergrundsystem 200 zentral verwalteten fahrzeugbezogenen Dienstleistungen oder Waren, wobei das Hintergrundsystem 200 über ein internet-basiertes Datennetzwerk 300 mit Parkhäusern 400 und anderen Leistungserbringern - hier symbolisiert durch Tankstellen 500 - verbunden ist. Nutzer des Systems können über mobile Endgeräte 600, zum Beispiel Smartphones, und eine darauf befindliche Datenanwendung ("App") mit dem Hintergrundsystem 200 über das internetbasierte Netzwerk 300 Daten austauschen. Das Hintergrundsystem 200 ist mit mindestens einem bargeldlosen Zahlungssystem 700 verbunden und damit befähigt, Dienstleistungen und Waren, die von registrierten Nutzern über mobile Endgeräte 600 beansprucht wurden, zu verrechnen.

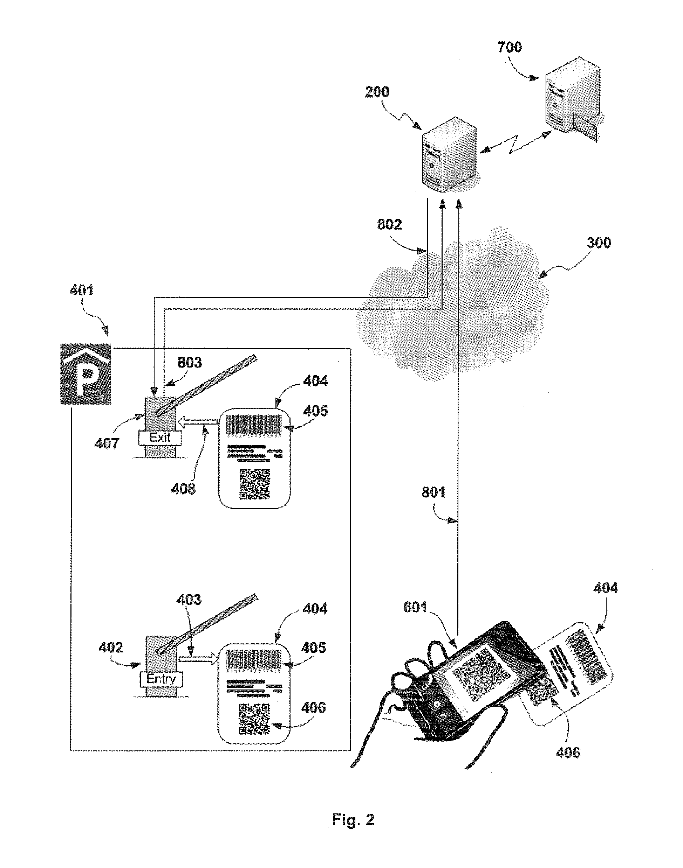

Fig. 2 stellt den Ablauf des erfindungsgemäßen Verfahrens am Beispiel Parkhaus dar.

Ein im Hintergrundsystem 200 registrierter Nutzer fährt in ein Parkhaus 401 ein und fordert an der Einfahrt 402 die Zufahrt zum Parkhaus, typischerweise durch Betätigung einer hier nicht eingezeichneten Parkscheinanforderungstaste. Es erfolgt die Ausgabe 403 eines Kurzparkertickets 404 an den Nutzer, und die Einfahrt wird geöffnet.

Das Kurzparkerticket 404 enthält einen parkhaus-internen maschinenlesbaren Code 405, der beispielhaft als Strichcode ausgebildet ist, aber auch in anderer Weise maschinenlesbar auf das Kurzparkerticket 404 aufgebracht werden kann, zum Beispiel als Magnetstreifen. Weiter enthält das Kurzparkerticket 404 einen optisch lesbaren system-internen Code 406, der typischerweise als zweidimensionaler Barcode oder QR-Code ausgeführt ist. Der system-interne Code enthält wenigstens einen systemweit eineindeutigen Kenner für das Parkhaus, eine eineindeutige Referenz zum parkhaus-internen Code 405 sowie einen Zeitstempel für die Einfahrtsdaten (Datum und Uhrzeit). In einer Ausführungsform können der parkhaus-interne maschinenlesbare Code 405 und der optisch lesbare system-interne Code 406 identisch sein.

Vor der Ausfahrt aus dem Parkhaus erfasst der Nutzer mittels einer Datenanwendung ("App") seines mobilen Endgeräts 601 den optisch lesbaren system-internen Code 406 des Kurzparkertickets 404. Die App sendet 801 die Daten des system-internen Codes 406 an das Hintergrundsystem 200. Das Hintergrundsystem 200 kennt damit den Nutzer, das Parkhaus 401, das Kurzparkticket 404 und die Einfahrtzeit. Anhand der im Hintergrundsystem hinterlegten Nutzerdaten, die auch wenigstens eine zulässige Zahlungsinformation (wie z.B. Kreditkartendaten etc.) des Nutzers enthalten, verifiziert des Hintergrundsystem 200 mittels verbundener bargeldloser Zahlungssysteme 700 die Zahlungsfähigkeit des Nutzers.

Bei positiver Verifikation meldet 802 das Hintergrundsystem 200 dem (nicht eingezeichneten) Parksystem des Parkhauses 401 die Daten des Kurzparkertickets 404 als Bestandteil einer Positivliste. Das Parksystem verteilt die Positivliste an alle Ausfahrten 407 des Parkhauses 401; d.h. das Kurzparkerticket 404 gehört nun zu denjenigen Tickets, die allen Ausfahrten 407 als ausfahrtberechtigt bekannt sind.

Zum Ausfahren fährt der Nutzer mit seinem Fahrzeug zu einer der Ausfahrten 407 und lässt das Kurzparkerticket 404 anhand seines parkhaus-internen Codes 405 einlesen 408. Die Ausfahrt 407 verifiziert anhand ihrer lokalen Positivliste, dass das Kurzparkerticket 404 ausfahrtberechtig ist und öffnet. Mit diesem Ausfahrtvorgang wird die zu dem Kurzparkerticket 404 gehörige Ausfahrtzeit über einen weiteren Datendialog 803 von der Ausfahrtschranke 407 an das Hintergrundsystem 200 gesendet.

Im Hintergrundsystem 200 sind nun alle zu dem Parkvorgang gehörigen Daten vollständig vorhanden. Basierend auf der Ein- und Ausfahrtzeit wird der Preis des Parkvorgangs berechnet und über die bargeldlosen Zahlungssysteme 700 mit dem Kunden verrechnet. Der Kunde erhält die zum Parkvorgang gehörende Rechnung auf elektronischem Weg.

Zwar bildet das System grundsätzlich die Möglichkeit, an der Einfahrt über einen Bildschirm einen optisch lesbaren Code zu präsentieren und diesen Code vom mobilen Endgerät des Nutzers direkt einlesen zu lassen und diesen Code später an der Ausfahrt zum Ausfahren zu nutzen. Diese technisch mögliche Variante hat die Nachteile, dass erstens bei laufendem Motor der Nutzer als Fahrer ein mobiles Endgerät bedienen muss - was gemäß StVO verboten ist -, dass zweitens der Nutzer als Fahrer dazu verleitet wird, bei der Anfahrt zum Parkhaus die App zu starten - was gemäß StVO ebenso verboten ist - und dass drittens der Nutzer an der Einfahrt mit dem mobilen Endgerät einen optisch lesbaren Code einlesen muss, was zumal - aus einem Fahrzeug heraus - nicht immer auf Anhieb funktioniert und die Einfahrt potenziell unnötig blockiert.

**Bezugszeichenliste**

| | |
|---|---|
| 100 | System für fahrzeugbezogene Dienstleistungen oder Waren |
| 200 | Hintergrundsystem |
| 300 | internet-basiertes Netzwerk |
| 400 | Parkhäuser |
| 401 | Parkhaus |
| 402 | Einfahrt |
| 403 | Ausgabevorgang |
| 404 | Kurzparkerticket |
| 405 | Parkhaus-interner Code |
| 406 | System-interner Code |
| 407 | Ausfahrt |
| 408 | Einlesevorgang |
| 500 | Tankstellen |
| 600 | mobile Endgeräte |
| 601 | ein mobiles Endgerät |
| 700 | bargeldlose Zahlungssysteme |
| 801 | Datensatz vom mobilen Endgerät zum Hintergrundsystem |
| 802 | Datensatz vom Hintergrundsystem an Ausfahrten |
| 803 | Datensatz von der Ausfahrt ans Hintergrundsystem |

## Patentansprüche

1. Verfahren zur Abwicklung von Bereitstellungsvorgängen im Zusammenhang mit dem Vertrieb von Produkten und Dienstleistungen, wobei in einem rechnerbasierten Zentralsystem Nutzer und Produkte und/oder Dienstleistungen anbietende Produktsysteme registriert sind, und wobei die Nutzer über Mobilfunkendgeräte verfügen, **gekennzeichnet durch** folgende Schritte:
a) Ein Nutzer signalisiert einem Produktsystem eine Erwerbsabsicht
b) das Produktsystem erzeugt daraufhin einen Erwerbsbeleg mit einem maschinenlesbaren Code, wobei der Code sowohl Produktsystem- als auch Produktinformationen umfasst,
c) der Nutzer erfasst den Code mit seinem Mobilfunkendgerät und leitet diesen an das Zentralsystem weiter,
d) das Zentralsystem überprüft die Bonität und erzeugt eine Bonitätsbestätigung, welches das Zentralsystem an das Produktsystem leitet,
e) das Produktsystem gibt den Bezug des Produktes beziehungsweise der Dienstleistung frei.

2. Verfahren nach Anspruch 1, **dadurch gekennzeichnet, dass** der Erwerbsbeleg wenigstens ein weiteres maschinenlesbares Element aufweist.

3. Verfahren nach Anspruch 2, **dadurch gekennzeichnet, dass** das weitere maschinenlesbare Element ein Magnetstreifen ist.

4. Verfahren nach Anspruch 2, **dadurch gekennzeichnet, dass** das weitere maschinenlesbare Element ein Strichcode ist.

5. Verfahren nach einem der vorhergehenden Ansprüche, **dadurch gekennzeichnet, dass** das Produktsystem an das Zentralsystem Detailinformationen nachliefert.

6. Verfahren nach einem der vorhergehenden Ansprüche, **dadurch gekennzeichnet, dass** der Nutzer durch das Zentralsystem anhand einer Teilnehmerkennung identifiziert wird.

7. Verfahren nach einem der vorhergehenden Ansprüche, **dadurch gekennzeichnet, dass** das Zentralsystem durch ein Abrechnungssystem ergänzt wird.

## Geänderte Patentansprüche

### Geänderte Patentansprüche gemäss Regel 137(2) EPÜ.

**1.** Verfahren zur Abwicklung von Bereitstellungsvorgängen im Zusammenhang mit dem Vertrieb von Produkten und Dienstleistungen, wobei in einem rechnerbasierten Zentralsystem Nutzer und Produkte und/oder Dienstleistungen anbietende Produktsysteme registriert sind, und wobei die Nutzer über Mobilfunkendgeräte verfügen, wobei folgende Schritte ausgeführt werden:
a) Ein Nutzer signalisiert einem Produktsystem eine Erwerbsabsicht,
b) das Produktsystem erzeugt daraufhin einen Erwerbsbeleg mit einem maschinenlesbaren Code, wobei der Code sowohl Produktsystem- als auch Produktinformationen umfasst,
c) der Nutzer erfasst den Code mit seinem Mobilfunkendgerät und leitet diesen an das Zentralsystem weiter,
d) das Zentralsystem überprüft die Bonität und erzeugt eine Bonitätsbestätigung, welches das Zentralsystem an das Produktsystem leitet,
e) das Produktsystem gibt den Bezug des Produktes beziehungsweise der
Dienstleistung frei,
**dadurch gekennzeichnet,**
**dass** der Erwerbsbeleg wenigstens ein weiteres maschinenlesbares Element aufweist, wobei das weitere maschinenlesbare Element ein Magnetstreifen ist.

**2.** Verfahren nach Anspruch 1, **dadurch gekennzeichnet, dass** das weitere maschinenlesbare Element ein Strichcode ist.

**3.** Verfahren nach einem der vorhergehenden Ansprüche, **dadurch gekennzeichnet, dass** das Produktsystem an das Zentralsystem Detailinformationen nachliefert.

**4.** Verfahren nach einem der vorhergehenden Ansprüche, **dadurch gekennzeichnet, dass** der Nutzer durch das Zentralsystem anhand einer Teilnehmerkennung identifiziert wird.

**5.** Verfahren nach einem der vorhergehenden Ansprüche, **dadurch gekennzeichnet, dass** das Zentralsystem durch ein Abrechnungssystem ergänzt wird.
